# EUROPEAN PATENT SPECIFICATION

(11) **EP 3 738 281 B1**
(45) Date of publication and mention of the grant of the patent: **03.01.2024**
(21) Application number: 18900230.6
(22) Date of filing: 31.12.2018
(51) Int. Cl.: H04L 25/02, H04B 17/309, H04B 17/373, H04B 7/0417, H04W 24/08, H04W 24/10, H04B 7/0408, H04B 7/06, H04B 7/08

(54) **PROFILED CHANNEL IMPULSE RESPONSE FOR ACCURATE MULTIPATH PARAMETER ESTIMATION**
PROFILIERTE KANALIMPULSANTWORT FÜR GENAUE MEHRWEG-PARAMETERSCHÄTZUNG
RÉPONSE PROFILÉE À IMPULSION DE CANAL SERVANT À UNE ESTIMATION PRÉCISE DE PARAMÈTRES DE TRAJETS MULTIPLES

(30) Priority: 12.01.2018 US 201862616578 P
(43) Date of publication of application: 18.11.2020
(73) Proprietor: Nokia Technologies Oy, 02610 Espoo (FI)
(72) Inventor: ZIRWAS, Wolfgang, 81249 Munich (DE)
(74) Representative: Nokia EPO representatives
(86) International application number: PCT/FI2018/050986
(87) International publication number: WO 2019/138156

(56) References cited:
- WO-A1-2014/040655
- WO-A1-2014/154293
- WO-A1-2017/088925
- GB-A- 2 513 677
- US-A1- 2004 162 030
- US-A1- 2005 141 624
- US-A1- 2016 365 991
- US-A1- 2017 180 063
- US-B1- 9 660 743
- NOKIA et al.: "CSI enhancements for MU-MIMO support", 3GPP TSG RAN WG1 Meeting #94-bis, 29 September 2018 (2018-09-29), XP051518810, Chengdu, People's Republic of China Retrieved from the Internet: URL:https://www.3gpp.org/ftp/tsg_ran/WG1_R L1ATSGR1_94b/Docs/R1-1811406.zip [retrieved on 2019-04-05]

## Description

### TECHNICAL FIELD

This disclosure relates to a 5G new radio (NR) mobile communication system for below 6 GHz RF bands, but is not limited to such a system.

### BACKGROUND

Accurate channel state information is the essential basis of advanced 3GPP new radio (NR) concepts like non-linear precoding, JT CoMP (Joint Transmission Coordinated MultiPoint), and massive MIMO serving a high number of users. Coded CSI RSs (channel state information reference signals) are expected to provide a high CSI estimation accuracy with respect to the channel transfer function (CTF). In the case of FDD (frequency division duplex), UEs measure the CTFs of all relevant channel components above a certain Rx-power threshold and afterwards have to report this CSI information to the gNB. In case of channel aging for moving UEs, it has been further shown that channel prediction is essential to maintain a large part of the performance under ideal CSI information (see Volker Jungnickel, Konstantinos Manolakis, Wolfgang Zirwas, Berthold Panzner, Volker Braun, Moritz Lossow, Mikael Sternad, Rikke Apelfröjd, Tommy Svensson, The Role of Small Cells, Coordinated Multi-point and Massive MIMO in 5G, IEEE Communications Magazine, special issue on 5G, May 2014). Channel prediction, like weather forecasting, faces a lot of skepticism due to limited reliability of the predictions over long time periods. For a successful standardization of channel prediction, it is therefore essential to provide accurate, robust and reliable prediction mechanisms.

Classical state-of-the-art channel prediction schemes have another inherent challenge as they are typically based on long-term observations of the radio channels. This is needed due to the superposition of many multipath components (MPC) comprising a radio channel and in case of the sampled time-domain channel impulse response (CIR) due to the convolution of many MPCs not fitting to the sample timing. Therefore, the sampled taps of the CIR combine the effects of many MPCs and the according parameters per MPC are not directly observable. The typical way to learn the unobservable parameters is then to analyze, for example, the Doppler spectrum of each CIR tap over multiple time instances (see Volker Jungnickel et al.), so that the effects of the individual MPC parameters become observable. The typical assumption is that the observation time should be in the range of one to several radio wavelengths λ; that is, for the GHz frequency range, often several hundred milliseconds (ms) of observation time is needed. In that time duration, multiple CSI estimates have to be collected and processed, for example, to estimate the covariance matrices as required for a Wiener filter solution.

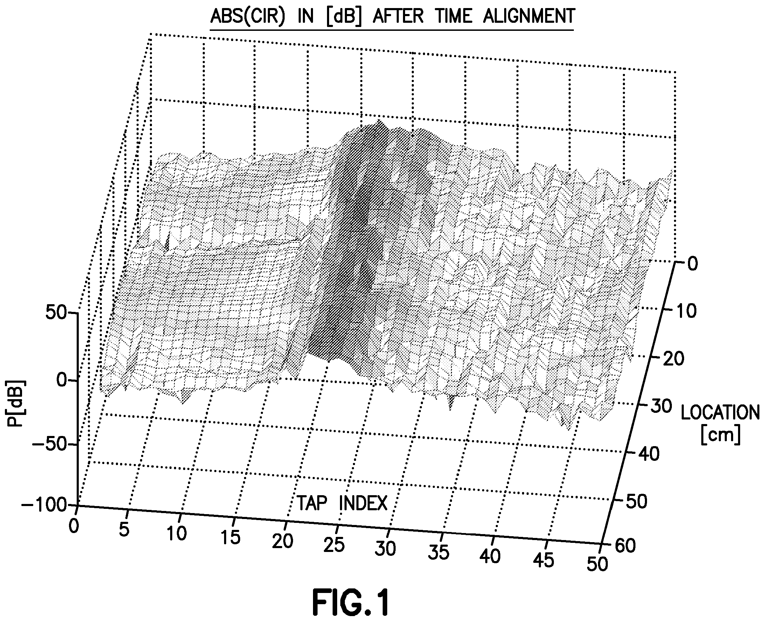

Figure 1 illustrates the typical behavior for the amplitude evolution over about five wavelengths λ (0.5 m) of a single UE antenna (LTE measurement, RF-frequency 2.6 GHz, NLOS scenario). More specifically, Figure 1 illustrates the typical evolution of the CIR amplitudes of the taps 1 to 50 for the movement over 0.5 meter. Due to the varying constructive and destructive superposition of MPCs, the amplitudes of the CIR taps vary by 20 or more dB. As a result, at certain location instants, some of the taps are even below the threshold for relevant taps; that is, they are more or less invisible to the channel estimator. Accordingly, a direct channel prediction of the further amplitude and phase evolution of these taps cannot be made.

For FDD systems, where CSI RSs are constantly being transmitted, long-term observations are basically possible, but they will reduce the sleeping time of UEs and will become a latency issue for short data packets. Instead, a CSI estimation scheme allowing a parameter estimation within a single, two, or a few observation instances of the CTF would be beneficial, so that data transmission can start more or less with minimum delay after receiving a scheduling grant.

It should be noted, for example, that CSI RSs every 5 milliseconds (ms) are assumed, so that, after 5 to 15 ms, such a novel estimation scheme would be ready for channel prediction. Alternatively, if the UE maintains the two to four most recent CSI estimates in its memory, even immediate channel prediction would be possible.

Wiener and Kalman filtering identify correlations within a radio channel based on estimated covariance matrices or learned-state space models over long observation intervals. Kalman filters theoretically achieve the same performance as Wiener filters, but are more suited for applying iterative updated state space models representing an autoregressive filter function. Despite long observation times, the achievable channel prediction performance is typically limited to one or several tens of the radio wavelength (see D. Aronsson, "Channel estimation and prediction for MIMO OFDM systems - Key design and performance aspects of Kalman-based algorithms", Ph.D. Thesis, Dept. of Engineering Sciences, Signals and Systems Group, Uppsala University, March 2011). The autoregressive filter functions have been found to be optimal for a quite limited filter length of two to a few filter poles, which is in contrast to the typical number of relevant MPCs of several tens or even several hundreds of relevant MPCs. These few poles are even of lower dimension than the theoretical minimum description length (MDL) describing the radio channel. This means that Kalman filters represent the combined effect of a multitude of MPCs. As a consequence, Kalman filters do not provide accurate MPC parameter estimates, and require long radio-channel observation times.

Parameter estimates can be achieved by the classical state space alternating generalized expectation maximization (SAGE) principle, which has been applied in different algorithms. For example, the RIMAX algorithm (see A. Ritcher, M. Landmann and R.S. Thoma, "Maximum likelihood channel parameter estimation from multidimensional channel sounding measurements", The 57th IEEE Semiannual Vehicular Technology Conference, 2003. VTC 2003-Spring 2003, pp. 1056 to 1060, vol. 2.) has been used in the context of channel sounding for the mapping of parameters to reflections in the surroundings, and uses the estimated frequency domain channel transfer function (CTF) for this purpose. It allows the parameter estimation of the double-sided radio channel per MPC, like complex amplitude, polarization, angles of arrivals and departures, Doppler shift, and delay. RIMAX uses the Levenberg-Marquardt algorithm to adapt the convergence speed for the iterative optimization algorithm. Unfortunately, RIMAX has the tendency to converge into a local optimum, instead of a global optimum. It requires, therefore, quite some extra effort to avoid being trapped in a local optimum, for example, by using very close-by start parameters for the iterative estimation, or by doing many start parameter variations.

Compressed sensing has the goal of finding the sparsest representation of signals. It has been applied to the time-domain representation of the radio channel using the orthogonal matching pursuit (OMP) algorithm (see T. Wild, C. Hoek, G. Herzog and J. Koppenborg, "Multi-antenna OFDM channel feedback compression exploiting sparsity", European Wireless 2013; 19th European Wireless Conference, Guildford, UK, 2013, pp. 1 to 6). It provides a set of sub-taps, which are the so-called "atoms", and, given certain statistical pre-conditions, will provide a signal representation with the minimum description length (MDL) for a given distortion level. For measured, as well as simulated, radio channels, an MDL of about 20 sub-taps has been found viable. The typical sub-taps use a time grid eight times finer, for example, than that of the original taps of the CIR. For a 20 MHz-LTE system, for example, the sub sampling timing might be 33 ns/8 = 4 ns, which means that the relative length of sub-taps is estimated with an uncertainty larger than 1 meter. More importantly, one can show that the sub-taps will generally be different from the MPCs of the CIR, which has two effects: i) there will be an artificial error floor even in case of a very high SINR of the Rx-signals, and ii) for moving UEs, there is no smooth evolution for subsequent channel observations. But, this smooth evolution would be needed for an accurate channel prediction. It should be noted that the concept of principal component analysis, as is being proposed by Samsung for NR phase II explicit CSI feedback, has probably quite similar behavior and drawbacks as the OMP algorithm (see 3GPP TSG RAN Meeting #76, Palm Beach, USA, June 5 to 8, 2017, RP-170xyz, Samsung, ZTE, CATT, Motivation for new WI: Enhancements on MIMO for NR).

Here, one should note that, from a theoretical point of view, Fisher information provides the upper performance bound of the unbiased parameter estimator, that is, the Cramer Rao lower bound (CRLB) for a given channel observation. For multiple observations within the coherence time of the radio channel, the theoretical Fisher information can be very high. For real-world radio channels, the main challenge is to achieve this theoretical bound due to the high number of parameters, that is, to find the maximum likelihood estimate for the full set of parameters, for example, the amplitude, phase, delay values for several tens of MPCs. Due to the high number of parameters, a direct maximum likelihood estimate is not possible, and an iterative scheme will be needed. For iterative schemes, the challenge is to find the global optimum in the high-dimensional parameter space.

It should be understood, both above and in the discussion to follow, that the term "gNB" should be understood to mean "network node". The term "gNB" is used to denote a network node in 5G. However, it should be understood that the present invention, as described below, is not limited to 5G, but may be applicable to other generations yet to be developed. As a consequence, "gNB" should be understood more broadly as a network node.

WO 2014/154293 discloses channel estimation where at least two sets of multipath components for a reception range are formed by applying spatial filtering to reference signal information measured by a communication device.

### SUMMARY

In a first aspect of the present invention, a method comprises receiving channel state information reference signals for a plurality of channel components from a network node; estimating the plurality of channel components based on the channel state information reference signals; transmitting the estimated plurality of channel components to the network node; receiving multipath component parameters from the network node; storing the multipath component parameters; estimating deviations of the multipath component parameters over time; and reporting the estimated deviations of the multipath component parameters to the network node.

In a second aspect of the present invention, a method comprises transmitting channel state information reference signals for a plurality of channel components to a user equipment; receiving an estimated plurality of channel components from the user equipment; storing the estimated channel state information; calculating a profiled parameter estimation for multipath components of the channel components by shifting relative delay between the multipath components and sample timing of channel impulse response in multiple steps to generate a profile of convoluted multipath components and by estimating from it the related multipath component parameters; transmitting the profiled parameter estimation for each multipath component to the user equipment; receiving estimated deviations in the multipath component parameters over time from the user equipment; and adapting the channel state information with the received estimated deviations in the multipath component parameters to obtain an improved prediction of the channel state information.

In a third aspect of the present invention, an apparatus comprises means for receiving channel state information reference signals for a plurality of channel components from a network node; means for estimating the plurality of channel components based on the channel state information reference signals; means for transmitting the estimated plurality of channel components to the network node; means for receiving multipath component parameters from the network node; means for storing the multipath component parameters; means for estimating deviations of the multipath component parameters over time; and means for reporting the estimated deviations of the multipath component parameters to the network node.

In a fourth aspect of the present invention, an apparatus comprises means for transmitting channel state information reference signals for a plurality of channel components to a user equipment; means for receiving an estimated plurality of channel components from the user equipment; means for storing the estimated channel state information; means for calculating a profiled parameter estimation for multipath components of the channel components by shifting relative delay between the multipath components and sample timing of channel impulse response in multiple steps to generate a profile of convoluted multipath components and by estimating from it the related multipath component parameters; means for transmitting the profiled parameter estimation for each multipath component to the user equipment; means for receiving estimated deviations in the multipath component parameters over time from the user equipment; and means for adapting the channel state information with the received estimated deviations in the multipath component parameters to obtain an improved prediction of the channel state information.

### BRIEF DESCRIPTION OF THE DRAWINGS

The foregoing and other aspects of these teachings are made more evident in the following detailed description, when read in conjunction with the attached drawing figures.
Figure 1 illustrates the typical behavior for the amplitude evolution over about five wavelengths λ, of a single UE antenna.
Figure 2 provides a real-world measured NLOS radio channel.
Figure 3 illustrates a comparison between an observed CTF function and a reconstructed CTF function.
Figure 4 illustrates a reconstruction of a CIR based on compressed sensing of CIR without profiling using an OMP-like algorithm.
Figure 5 illustrates sub-tap evolution for a UE movement over 0.2 meters.
Figure 6 illustrates the smooth evolution of MPC parameters over 50 locations.
Figure 7 is a flow chart for the novel CSI reporting scheme.
Figure 8 shows a simplified block diagram of certain apparatus according to various exemplary embodiments of the present invention.
Figure 9 shows part of another exemplary radio network.

### DETAILED DESCRIPTION

One exemplary embodiment relates to a 5G new radio (NR) mobile communication system for RF bands below 6 GHz. The focus is to achieve simultaneously a high performance, including a high spectral efficiency, with a low feedback overhead for CSI reporting. The system may contain a massive MIMO system combined with a grid-of-beam (GoB) concept applied to a joint transmission (JT) CoMP over several cells and sites.

The exemplary embodiments of the invention aim to ensure robust and accurate estimation of multipath component parameters for real-world radio channels. These parameter estimations can then be used for accurate explicit CSI feedback with moderate reporting overhead. Other possible effects of the exemplary embodiments of the invention relate are: i) better predictability of radio channels, ii) highly accurate UE location algorithms, and iii) moderate UE complexity.

The exemplary embodiments of the invention aim to provide a robust and reliable parameter estimation for all relevant multipath components. In addition, the achievable estimation accuracy of the parameters, especially of the delay values τ, per MPC, may be increased, compared to the previously reported ± 1 ns. For channel prediction, or in the context of model-based channel prediction, accuracies in the range of cm or better are desirable; such an accuracy relates to an accuracy for the relative delays between MPCs of about 30 picoseconds, rather than nanoseconds.

In accordance with one embodiment of the present invention, the parameters are estimated based on a so-called profiled CIR, which can be generated by applying multiple phase slopes to the CTF plus an additional IFFT on each such phase-shifted CTF.

In time domain, this is similar to a small time shift for each CTF phase slope, and all of these time-shifted versions of the CIRs are combined to form a single profiled CIR. To illustrate the concept, we will assume a single MPC. The MPC then characterizes the radio channel by a single Dirac function. As the Tx-signal, as well as the Rx-signal, will be of limited bandwidth, the Dirac function has to be convoluted with a sine function (sin(x)/x) fitting to the overall bandwidth of the RF filter.

Compared to the conventional single observation of the CIR at the sample time of the CIR taps, the multiple time shifts will reconstruct the full sinc function for this MPC, so that one can directly observe the maximum amplitude of the profiled CIR, falling together with the amplitude of the MPCs, as well as the delay at which the profiled CIR becomes maximal, this being the delay of the MPC. The phase of the MPC can then be estimated by minimizing the difference between the phase evolution of the profiled and reconstructed CIR.

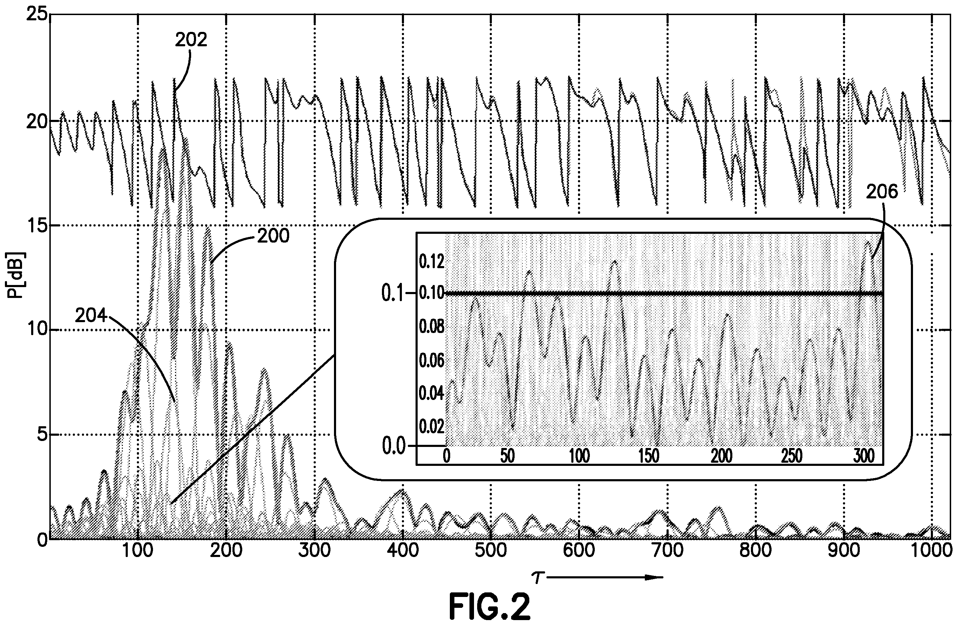

In reality, the CIR is the superposition of many MPCs with different delay, amplitude and phase values; Figure 2 provides a real-world measured NLOS radio channel. More specifically, Figure 2 shows profiled CIR 200; estimated, reconstructed CIR 202; sinc functions for MPCs 204 comprising the reconstructed CIR; and error signal between profiled and reconstructed CIR 206. Obviously, for multiple MPCs, a direct mapping as for the single MPC is not possible, but one can find very good start parameters for the parameter optimization. In addition, one can benefit from the different power and delays of different MPCs, which decouple their effect to a large extent. That way, it is easy to iteratively optimize single MPCs or small sub-sets of MPCs according to the SAGE principle. As a further benefit, it is also relatively easy to define the step size for the iterative optimizations depending on the current error signal strength, as well as the power and the distance of the MPC to the error signal.

The exemplary embodiments of the present invention provide at least the following options:
- Start with the strongest MPCs close to the strongest peaks of the profiled CIR.
- Identify whether the investigated peak is from a single MPC; that is, does it have the shape of the sinc function close to the peak or does it deviate from the sinc shape? In the latter case, add a further suitably chosen MPC.
- In case there are two to several MPCs close to a peak, then one should, at least partly, do the optimization for the combined set of MPC parameters, as these will mutually interact with each other. From the SAGE perspective, this means to form a set of simultaneously optimized parameters containing these MPCs.
- MPCs with strong delay differences can be optimized in a first step in parallel as there are only minor interactions.
- In contrast to typical frequency-domain SAGE implementations, here one might apply a windowing function; that is, one might calculate and observe the error signal between profiled and reconstructed CIR only relatively close to the delay of the relevant MPCs. That way, a more focused optimization is possible and the processing overhead can be reduced. In particular, one might calculate and minimize only the maximum peak errors within the window, instead of calculating the NMSE, to save further processing complexity.
- Typically, for SAGE parameter-estimation algorithms, there is the issue of identifying the number of relevant MPCs, and, for that purpose, one often relies on estimating the MDL for the given CTF, for example, based on the covariance matrix. Here, a more accurate and adaptive estimation is possible by analyzing the error signal between profiled and the so-far estimated CIR. In case the iterative optimization stalls, then one can assume that there is at least one missing MPC, which then can be added. This is repeated, until the residual error signal is either sufficiently small or is no longer smooth, so that one may assume that the residual error is either due to diffuse scattering or due to noise, and not the result of a small power MPC.

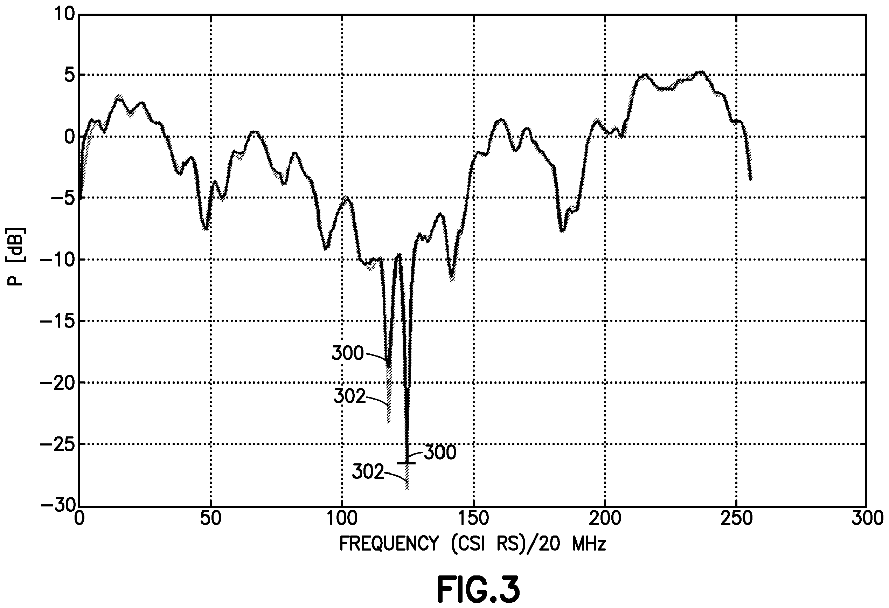

For the given measured channel, the comprising MPCs have been estimated according to the above-described principles, leading to the MPCs 204 in Figure 2 in the form of the according sinc functions. These have been added up with the estimated amplitude, phase, and delay values generating the reconstructed CIR 202. The difference signal 206 can be found having maximum peaks of around 0.1 in linear values. Compared to the peak amplitude of the strongest MPCs of around 18, this results in a relative error of -45 dB. The according normalized mean square error (NMSE) for the estimated channel transfer function (see Figure 3) is accordingly good with about -26 dB in this case. More specifically, Figure 3 shows observed channel transfer function 300; and reconstructed CTF 302 based on reconstruction of profiled CIR. One should note that the sinc functions, that is, the delays of the MPCs, generally do not fall together with the peaks of the profiled CIR. This can be explained by the superposition of the unobservable MPCs. This is a main difference compared to compressed sensing, where the OMP algorithm tries to get close to these peaks.

From the peak error, it is also possible to estimate the relative delay accuracy for the estimation, and this is, for a value of -45dB, close to Δτ = 30 ps or Δl = 0.01 m = 1 cm, that is, much smaller than for the state-of-the-art estimators. The reason is that, in case of the profiled CIR, we do not select taps or sub-taps, but do the optimization with respect to the analog MPC parameters.

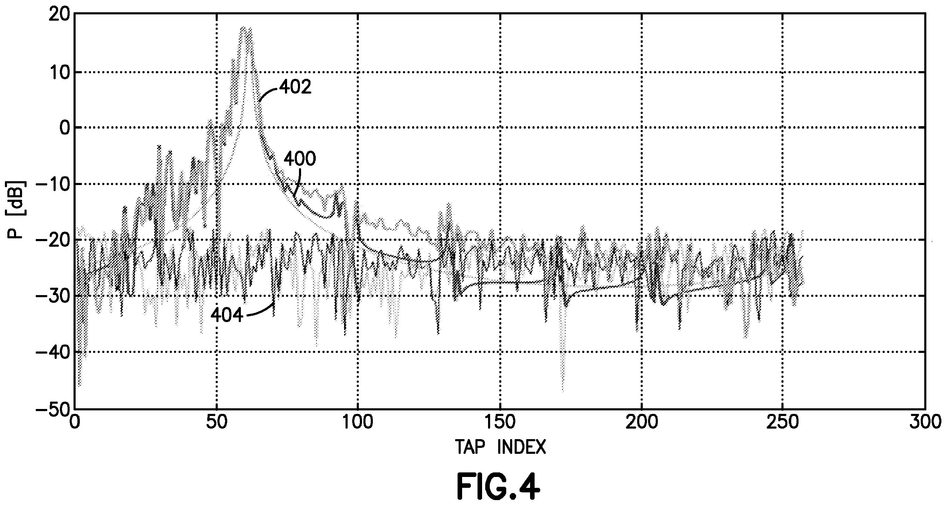

In Figure 4, for comparison, the CIR reconstruction based on a certain variant of compressed sensing using the OMP algorithm is given. More specifically, Figure 4 shows the reconstruction of sub-tap CIR 400 based on compressed sensing; of CIR without profiling 402 using an OMP-like algorithm. The residual error signal 404 is about 6 dB worse than the result from the profiled CIR. The resulting number of sub-taps is close to 20, which is more or less the MDL of this channel realization. In contrast, the number of MPCs, which have been found with the above-described profiling solution, has been 49; that is, the MPCs are not an MDL representation of the radio channel. For better understanding, assume, for example, two MPCs with similar power and delay values. Compressed sensing will combine these two MPCs into a single sub-tap close to the peak value in between the two sine functions of the CIR fitting neither the left nor the right sinc function.

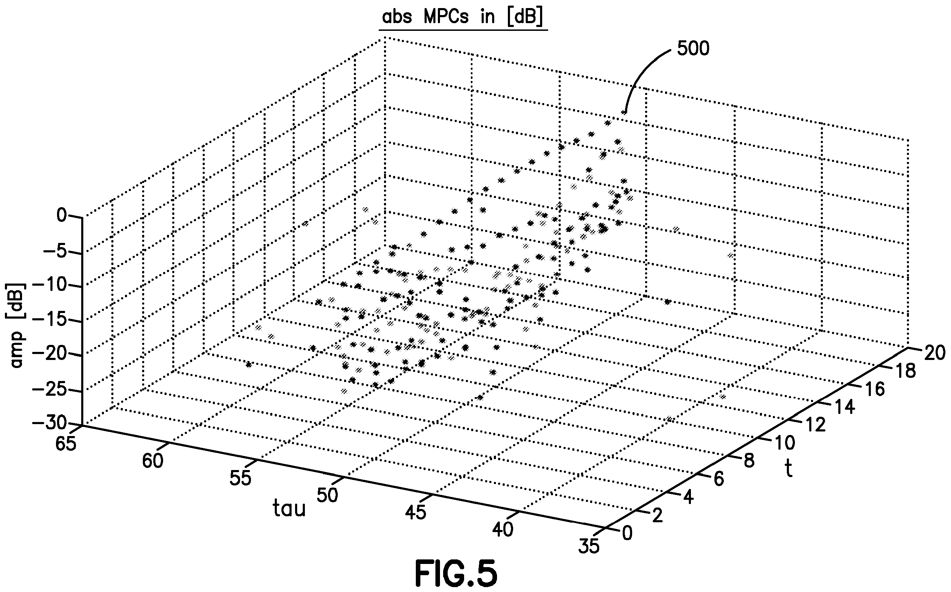

The benefit of identifying all relevant MPCs instead of artificial sub-taps is the potential for improved predictability of the radio channel due to the smooth evolution of MPCs over short distances. This is not the case for the sub-taps as can be concluded from Figure 5, where the strongest sub-tap 500 is still somewhat predictable, while the lower power sub-taps follow quite irregular and unpredictable paths for the moving UE. More specifically, Figure 5 shows sub-tap evolution for a UE movement over 0.2 meter, where the z-axis is the power in dB and the x-axis is the sub-tap number.

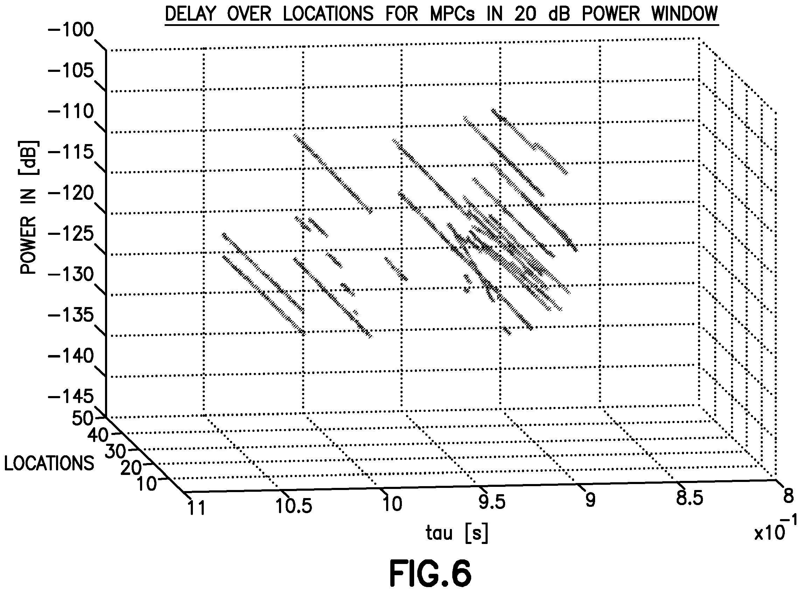

Figure 6 illustrates, in contrast, the ideal evolution of the MPC parameters as found by a ray tracing simulation, which would allow for an accurate long-term channel prediction by linear extrapolation of the parameters. More specifically, Figure 6 is an illustration of smooth evolution of MPC parameters (amplitude and delay) over 50 locations (0.5 meter).

The exemplary embodiment profiled CIR estimation contains following possible features:
- Profiling for MPC parameter estimation with high prediction horizon: The profiling solution may be used for parameter estimation of MPCs, which can be applied to explicit channel state information (CSI) reporting and is, in addition, applicable for UE-based channel prediction and provides potential benefits like accurate, robust and global optimum finding parameter estimation. These accurate estimates promise a comparably large CSI prediction horizon.
- Combined UE-gNB processing: Known for FDD is a scheme, where CSI estimation is done at the UE side, and then the explicit CSI is reported with or without channel prediction, and using some form of compression. That is somewhat the best solution for minimizing the reporting overhead, but at the cost of UE complexity. Alternatively, the UEs estimate the radio channel with minimum effort and report the more or less unprocessed CSI information to the gNB, which will then extract the useful information, like the predicted radio channels. The simplest such scheme is, for example, analog CSI feedback, and its benefit is that the processing effort occurs at the gNB side.

According to one embodiment of the invention:
∘ The UEs report semi-statically a single or few CSI estimates without complex pre-processing, but high accuracy to the gNB; for example, every 100 to 500 milliseconds (ms) a set of CSI estimates for four consecutive CTFs. As it is expected that UEs will receive several to several tens of relevant channel components, the UE will report the CSI for all these channel components in a block of data. Due to semi-static reporting, the overall overhead will be relatively small. In addition, it makes sense to combine the semi-static estimates with especially accurate CSI RS transmissions in downlink, allowing all UEs to do especially accurate estimates with minimal inter-CSI RS interference. This increases the CSI RS overhead, but, due to infrequent transmission, has only a minor effect on the overall overhead.
∘ **The gNB does an accurate estimation of all MPC parameters for all relevant channel components based on the profiling concept, including the MPC amplitude, phase and delay values.** As there are multiple reports with predefined delays, in addition the Doppler frequencies µ per MPC can be estimated as well. These accurate estimates of all parameters of all MPCs are now being reported to the UEs over, for example, the PDCCH with the smallest possible delay.
∘ In a third step, the UEs use the accurate parameter estimates generated by the gNB as start parameters for their further channel estimation as well as channel prediction. In case the parameters are close to the actual values, only a few iterations for the further parameter tracking will be needed at the UE side, thereby significantly reducing the UE complexity. This solution combines low UE processing overhead with accurate estimation and prediction capabilities and, accordingly, low CSI reporting overhead.

Instead of semi-static reporting of the full CSI information, the UEs might alternatively trigger an according accurate MPC parameter estimation process if useful or needed; that is, the UE reports the CSI and the gNB responds by providing the accurate MPC parameter estimates.
- Deep Neural Network: The gNB might relay the parameter estimation to the edge cloud, and especially to specific artificial intelligence instances in the network. Specifically, deep neural networks seem to be well suited to find in a fast way good start parameters based on the profiled CIR, as it has quite some similarities with pattern recognition.
- Multiple parallel parameter estimates: In addition, it is being proposed to use the profiled CIR for multiple parallel estimations. For the multiple parallel estimations, it is possible to vary the optimization parameters, for example, to use different window sizes, different MPC subsets, different optimization step size for different parameters, different levels of co-optimizing of parameters of adjacent MPCs with similar amplitude and/or delay values, and so forth. This solution may be more suited for cloud-based implementations.
- Novel CSI reporting scheme: In a one embodiment, multiple channel prediction variants may be used for a novel CSI reporting scheme, where the gNB provides the UE with a set of possible prediction outcomes, generated from the multiple parallel parameter estimates as described above. Afterwards, the UE reports the best fitting prediction out of the set of possible prediction outcomes. This promises potentially a very low feedback rate of, for example, a few bits, like 3 bits, every 5 ms to select from 8 possible predictions per relevant channel component, in combination with a high prediction performance. The reason is that all different prediction variants will be at least close to the real-world evolution of the radio channel. This concept might be further extended to provide the combined prediction error for multiple channel components. In another variant, the selection of the best-fitting prediction might be combined with a scaling factor or other correction terms, which generates some more feedback bits, but allows for a more flexible adaptation.
- Support of irregular CSI RS allocations: For 3GPP new radio, it is in discussion to place sub band specific CSI RSs. In that case, full CSI RSs might not always be available over the full bandwidth. Using the semi-static accurate parameter estimates together with the prediction, it will also be possible to track the parameter variations in case CSI RS are missing in some sub bands of the CTF by matching the reconstructed with the measured CTFs at the PRBs, where CSI RS will be available. This provides some extra flexibility for CSI RS allocations.

The exemplary embodiments of the present invention may provide one or more following effects:
- Close to physical layer representation of the radio channel: estimating the MPC parameter leads to a description of the radio channel which is as close as possible to the physical layer. Therefore, it is the most versatile representation, allowing best channel predictability and providing, for example, best precoding flexibility. For example, completely different applications can also be envisaged, such as more accurate UE localization schemes (see below). This will also allow the mapping of the estimated MPCs to that of a building vector data model (BVDM) representing the same scenario, which allows, for example, an accurate training for the BVDM based on the UE feedback in the future. A combined standardization solution for reporting of either sub-taps achieved by compressed sensing or of accurate delay values achieved by CIR profiling might be possible. This can be achieved by using different quantization levels for the delay values, that is, sub-taps are reported as sub-tap ID, while delay values are reported with respect to the delay of the start delay for each MPC, or as absolute values relative to the next tap with higher quantization level fitting to the intended accuracy level. In the case of LTE, a 30 picosecond (ps) resolution would then require six to seven instead of, for example, 3 bits, for the delay reporting.
- Low-latency channel prediction: Profiling of CIRs allows accurate estimates of the parameters describing the multipath components, like their amplitudes α, phases ϕ and relative delays τ, from a single CIR. With two consecutive accurate estimates, it is possible to have at least a first channel prediction by linear interpolation of the two estimates. This is an important advantage over conventional, for example, Doppler-based channel prediction schemes, like Wiener or Kalman filtering, where typically long observation times over multiple wavelengths λ, that is, several hundreds of milliseconds, is needed. This makes channel prediction more practical by far.
- Smooth Parameter Evolution: Accurate estimation of MPC parameters has a benefit over state-of-the-art sub-tap estimation as, for example, proposed in T. Wild et al. in the context of compressed sensing. These compressed sensing algorithms often apply a variant of the orthogonal matching pursuit (OMP) algorithm with the goal of finding the minimum description length for a given channel realization. This makes sense for CSI reporting, but as can be concluded from Figure 5, the sub-taps follow an irregular evolution. In contrast, MPCs have a smooth evolution, at least as long as the large scale parameters do not change.
- Identification of death and birth of MPCs: In real-world scenarios, not all of the MPCs are as smooth as in typical channel models, for example, in case a UE is passing an obstacle or crossing a street. This death and birth of MPCs and the relatively fast change of their amplitudes can be accurately observed by the profiling solution. State-of-the-art solutions fail in this respect as they need a long-term observation to identify the state space model or, in case of compressed sensing, to identify the relevant sub-taps.
- Path length estimates in cm-range → usage for accurate localization: Profiling allows for accurate estimations of the relative delay of multipath components in the range of one centimeter, as can be concluded from measurements in a NLOS location 300 meters away from an LTE eNB. This opens the opportunity for significant further improvements for indoor localization of UEs compared to the conventional RF fingerprinting solution. For that purpose, the angle of arrival for the impinging MPCs from their last interaction points will be matched to the building vector data map for the given location. Especially, the combination with virtual beamforming (see B. Amin, W. Zirwas, M. Haardt, User Data Transmission over Virtual Beams for 5G Massive MIMO Systems, VTC2016), where, for moving UEs, the CSI estimates of multiple successive locations are being combined to achieve some further beamforming gains, seems to be well suited for the localization purpose. The virtual beamforming gain allows one to reduce the number of relevant MPCs, provides more accurate information on the angle of arrival for the MPCs, and provides significant SINR gains for the estimations.
- Processing complexity moved from UE to gNB: By transferring the most complex calculations for finding the main multipath component parameters from the UE to the gNB, or into the cloud, complex UE calculations can be minimized, which might otherwise be a challenge for UE vendors. The cloud can, in addition, ensure a low processing time in case of strong parallelization of the profiling calculations.
- Exploiting progress in the area of artificial intelligence: Artificial intelligence (AI) and/or deep neural networks may be suited for MPC parameter estimation or at least for providing a good first guess of the start parameters as the profiling has strong similarities to pattern recognition.

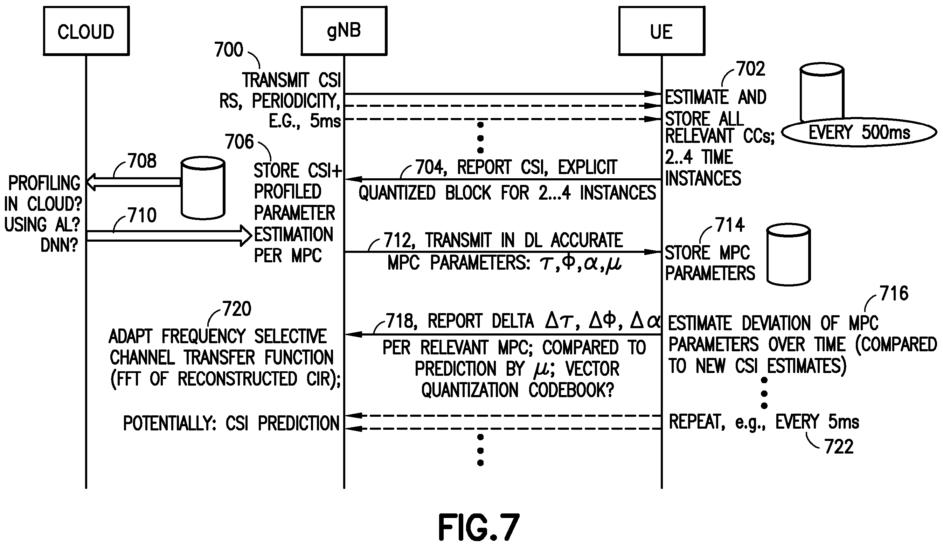

For better understanding, a flow chart for the novel CSI reporting scheme is provided in Figure 7. This flow chart provides a distributed processing scheme for the profiling solution, but would also work similarly for other sophisticated MPC parameter estimation schemes. It assumes that the radio channel comprises a high number of superposed MPCs, where each MPC has a different relative delay τᵢ, amplitude αᵢ and phase ϕᵢ. These parameters are the result of the different length of the MPC from the Tx-to the Rx-point, as well as the result of the different interactions like reflection-, diffraction- or transmission processes. For a moving UE, these parameters vary over time and for example for a varying delay Δτᵢ one often reports also the according Doppler shift µᵢ.

Due to the superposition of a high number of MPCs, it is very challenging to estimate these directly unobservable parameters. Assuming 50 MPCs - each having the three parameters delay, amplitude and phase - then overall 150 parameters have to be estimated based only on 256 CSI RSs observations. Neither the frequency domain channel transfer function nor the time domain channel impulse response provides a good clue for reasonable start values for the iterative optimization. The reason is the inherent ambiguity of observed tap values with respect to the generating MPCs as a result of the convolution of the Dirac function describing the MPC with the sine-function (sinc = sin(x)/x) for the rectangular filter function in frequency domain.

For illustration, let's assume a single MPC: in case the delay of the MPC fits exactly to the time instances of the sampled CIR, there will be only one strong tap with the amplitude of the MPC, while all other taps will be zero due to the periodic zeros of the according sinc-function (similar as known for OFDM subcarriers). In that case, the parameters of the MPC can be directly calculated. But, generally the delay of the MPC will not be aligned with that of the time samples of the CIR, and, in that case, the power of the MPC will smear over all CIR taps. Especially, in case of multiple MPCs, the signals from all MPCs will add up in an unpredictable manner.

For profiling, the idea is to shift the relative delay between the MPCs and the sample timing of the CIR in multiple steps so that one generates a full profile of the convoluted MPC, that is, a single MPC will generate a typical sinc-function, which has its maximum amplitude at the delay value of the MPC. Therefore, for a single MPC, one could directly estimate all MPC parameters. In case of the superposition of multiple MPCs, the profiling provides at least very good start parameters for the delay, amplitude and phase values of the MPCs. For the further iterative optimization, one uses these start values to construct an artificial CIR, CIRₐᵣₜ, by linearly summing up the sinc-functions of all MPCs, that is, CIRₐᵣₜ (τₖ) = Σ αᵢ e^{-jϕi} sinc(xₖ- τᵢ). Then, one calculates the difference error signal dₑᵣᵣₒᵣ(τₖ) = CIRₚᵣₒₜ(τₖ) - CIRₐᵣₜ (tₖ), where CIR_{prof}(τₖ) is the profiled CIR generated from the measured channel transfer function CTFₘₑₐₛ. τₖ is the time sample k of the subsampled CIR, where a typical subsampling timing might be τₖ₊₁ - τₖ = Δt/N, with Δt = 1/F being the sample timing of the CIR, where F is the bandwidth of CTFₘₑₐₛ. A typical oversampling factor N for the profiled CIR is for example N=10 or N=20.

For the calculation of CIR_{prof}(τₖ), one has to generate the multiple time shifts τₖ and the easiest way is to apply according phase slopes on the measured channel transfer function CTFₘₑₐₛ, i.e., CIR_{prof}(τₖ) = IFFT { **CTF**ₘₑₐₛ e⁻ (-j 2π τₖ/Δt tᵥ)}, where tᵥ is the vector tᵥ = [1...k...K]/K generating the increasing phase slope values.

The above described profiling solution helps to find a good set of start parameters τᵢ, αᵢ and ϕᵢ for all MPCs. In addition, the error signal dₑᵣᵣₒᵣ(τₖ) guides the iterative optimization very effectively as it generates strong error peaks at those time delays with an according mismatch in the MPC parameters. Furthermore, the sinc-functions affect mainly the neighboring taps of the CIR, while taps with large relative delays are more or less decoupled from each other. Therefore, one can apply a localized optimization at a certain delay value and, at the same time, arrive at a global optimum.

Despite these benefits, still there is a relatively high processing overhead, at least for the first parameter estimations. This might be too high for UEs, especially under the assumption of limited UE capabilities. In the exemplary embodiment of Figure 7, the main processing load from the UE is shifted to the gNB, that is, the UE is reporting in the first step just two to a few unprocessed channel transfer functions. For that purpose, the UE receives the subcarriers with CSI RSs, uses some lossless quantization and reports these values to the gNB. The gNB then can do the heavy processing for finding a first best estimate of all the parameters and store it in its memory. Finding a first best estimate means to do a high number of iterations for the optimization and, in addition, to run different type of optimization algorithms. In addition, the gNB might apply a channel prediction, that is, a linear prediction of the evolution of the MPC parameters based on the multiple channel observations, and store these values as well.

In the next step, the gNB reports these estimated MPC parameters τᵢ, αᵢ and ϕᵢ for all MPCs to the UE, where they provide very good start values for any further tracking of the evolution of the MPC parameters. Knowing a first accurate set of MPC parameters simplifies the tracking of the further evolution of these MPC parameters significantly so that is can be done at the UE side quickly and reliably in combination with low processing overhead.

Even in case of accurate parameter estimation using the profiling solution, small channel prediction errors will add up over time so that the received CSI at the UE and the predicted CSI will diverge. For that purpose, it is proposed that the UE regularly report these small deviations between predicted and actual CSI, that is, the deviation of the MPC parameters τᵢ, αᵢ and ϕᵢ compared to the predicted ones. Here, typical values might be reporting of delta values every 5 to 10 ms, but, for lower time variance, larger values might be possible.

Large scale fading of radio channels will change after some time for moving UEs due to death and birth of MPCs as a result of street crossings or of obstacles like cars, trees or houses. Therefore, it is possible to adapt the accurate MPC parameter estimations as well as the related prediction from time to time and typical values for that are every 500 ms (see according bubble in Figure 7 at UE side). Even without strong large scale fading, it makes sense to realign and synchronize gNB and UE parameters from time to time and with 500 ms the according overhead will still be very low.

More specifically, Figure 7 is a flow chart for profiling-based channel prediction. In the following, there is a short description for each sequential step given in the flow chart (each item with bold text refers to the step in Figure 7 with the same text):
**1) Transmit CSI RS, periodicity, for example, 5 ms:** Here, it is assumed that the gNB is transmitting periodic CSI RSs for all relevant channel components at 700, similar to what is possible for LTE or NR phase I. The periodicity of the CSI RSs can be typically defined by the gNB and typical values are, for example, 5 ms, which is suitable for moderate UE speeds. CSI RSs are, for example, transmitted every 6^{th} subcarrier for all antenna ports, so that a frequency selective channel estimation is possible.
**2) Estimate and store all relevant CCs; 2 to 4 time instances:** At 702, the UE estimates all relevant channel components in view of the periodic CSI RS transmissions, based on available estimation algorithms like, for example, NMSE or Wiener filters. In addition, the UE stores at least two to four consecutive channel estimates, so that a channel prediction becomes possible. It should be noted that conventional channel predictors, like Wiener or Kalman filters, require a much higher number of channel estimates for a suitable channel prediction. These conventional channel predictors have to learn the state space parameters by long-term observations. Here, profiling as described in the text above, provides one of its clear benefits.
**3) Report CSI, explicit quantized block for 2 to 4 instances:** In the next step at 704, the UE may perform, as one option, a parameter estimation for all relevant MPCs and for all relevant channel components, and report these parameters to the gNB. Accurate parameter estimation may require an estimation based on the profiling concept, as otherwise it may be difficult to find the real-world MPCs, especially based on only two channel observations. In addition, there exist several options for improving the convergence speed of the algorithm. One option is to use artificial intelligence (AI), potentially in combination with deep neural networks (DNN). DNNs can find, from the observation of the profiled CIR, good start parameters for all the MPCs with high likelihood by a single classification step. AI can control the progress of the overall optimization, like defining the most suitable step sizes, optimum ordering of sequential parameter estimates, the use of multi-parameter estimates for more challenging parameter constellations, detection of further MPCs based on the error signal, and so forth. Both DNNs and AI may be implemented at the network side, where sufficient processing power and energy can also be provided for a fast and efficient estimation of the MPC parameters. For that reason, beside the conventional option to do the full estimation and prediction process at the UE side in another option, the UE relays, that is, reports, the estimated CSI information for the two or more time instances to the gNB. For that purpose, either directly quantized CSI values from the frequency domain (estimates of the CSI RS resource elements) or, to some extent, compressed quantized time domain channel taps can be reported. The quantization can be complex phase and amplitude or real and imaginary parts per complex value, and should use a high number of bits (for example, 10 bits per value), so that the quantization noise will be well below that of the SINR level. As these reports may happen semi-statically, the contribution to the overall overhead will nonetheless be small.
**4) Store CSI + profiled parameter estimation per MPC:** At 706, the gNB will store the received quantized CSI information for the two to a few time instances and may do accurate parameter estimation directly at the gNB or, optionally, at 708, forward the data to the edge cloud. The telco (telecommunications) edge cloud can then provide highly sophisticated and fast profiling solutions as a service, so that the gNB receives the set of MPC parameters within a few milliseconds at 710. These now include, beside the delay, amplitude and phase, the evolution of all these parameters over time, which will then allow the prediction of the channel evolution into the future.
**5) Transmit in DL accurate MPC parameters:** τ, ϕ, α, µ: At 712, these accurate parameter estimates, including the estimated evolution over time (µ), are then reported back to the UE.
**6) Store MPC parameters:** At 714, the UE stores these parameters and will use them for its further parameter estimation. Here, the motivation is that, having a very good set of start parameters, the further estimation of the evolution of these parameters becomes easier and with a lower risk of ending in a local optimum. This low-complexity tracking of parameters can be therefore done at the UE side. It should be noted that here again profiling with its capability of finding the real-world MPCs is beneficial as only for these MPCs a smooth evolution of the parameters is being given.
**7) Estimate deviation of MPC parameters over time (compared to new CSI estimates):** At 716, the UE compares the predicted evolution of parameters with its latest estimates to identify the prediction error over time, which will be low for a good prediction.
**8) Report delta** Δτ, Δϕ, Δα **per relevant MPC; compared to prediction by** µ; **vector quantization codebook:** At 718, the UE then reports the delta of the so-far predicted radio channel (MPC parameter evolution) to the latest estimates done by the UE. For a good prediction, these deltas will be low. In addition, prediction errors for low-power MPCs will have only a small or minor contribution to the overall estimation error. For that reason, the reporting should be adapted to the strength of each MPC and, for example, suitably chosen vector quantization codebooks may be used.
**9) Adapt frequency selective channel transfer function (FFT of reconstructed CIR):** At 720, the gNB adapts, in the next step, its predicted CSI information, taking into account the latest delta reports from the UE, and does a new, improved channel prediction. That means that the gNB takes its stored and predicted MPC parameters τᵢ, αᵢ and ϕᵢ and adds the reported delta values Δτᵢ, Δαᵢ and Δϕᵢ.
   The parameters τᵢ(t), αᵢ(t) and ϕᵢ (t) are time variant. To make a prediction of the evolution of these parameters in the simplest case, one can do two estimates at time instances t_1 and t_2 and do a linear prediction based on these two observations. So the predicted parameters τᵢ(t), αᵢ(t), and ϕᵢ(t) can be calculated from τᵢ(t_predict) = [(τᵢ(t_2)-τᵢ(t_1))/(t_2-t_1)] *t_predict. Similarly, the prediction can be done for αᵢ(t) and ϕᵢ(t). In a case of more than two observations, the prediction can be improved by finding, for example, the best fit using an MSE criterion or by applying some spline interpolation. Nonetheless, for real world radio channels and with increasing prediction time t_predict, there will be an increasing prediction error, that is, the predicted τᵢ(t_predict) will slightly deviate from the real world evolution of this parameter τᵢ^{real}(t_predict), and this can be estimated by the UEs using the latest channel measurements to get the estimated τᵢ^{estimate}(t_predict). In the next step, the UEs will report these parameter deviations Δtᵢ(t_predict) = τᵢ(t_predict) - τᵢ^{estimate}(t_predict) to the gNBs, so that these can update their predicted parameter evolution by the new more accurate latest UE estimates, which just means that the gNBs will add Δτᵢ(t_predict) to τᵢ(t_predict), that is, τᵢ^{new}(t_predict) = τᵢ(t_predict) + Δτᵢ(t_predict). Other parameters will be handled similarly.
**10) Repeat, for example, every 5 milliseconds:** The delta reports should be ideally reported regularly and with low latency, such as every 5 milliseconds, at 722. In case of high quality parameter estimation and according prediction, the overhead for these delta reports will be low despite the relatively low periodicity.

From the flow chart of the exemplary embodiment of Figure 7, it can be seen that the overall scheme combines ideally low UE complexity, low reporting overhead (for the regular feedback part), high CSI accuracy far beyond that of classical codebooks, fast and accurate channel prediction based on few reports and the option for vendor-specific variants for the profiling solution at the gNB as well as UE side. In addition, it is the channel representation being closest to the physical radio channel itself with according smooth evolution of its parameters.

In general, the multipath components may be either the physical layer multipath components or multipath components in a wider sense, such as from an algorithmically mathematical point of view.

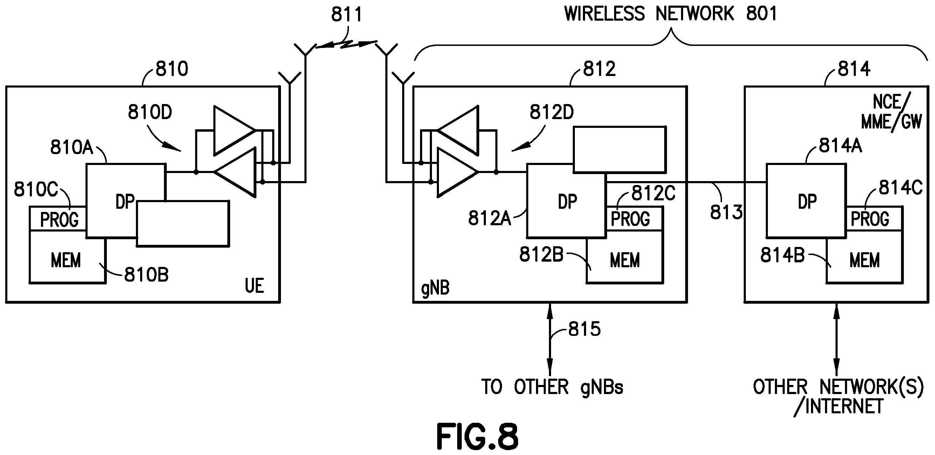

Reference is now made to Figure 8 for illustrating a simplified block diagram of various electronic devices and apparatus that are suitable for use in practicing an exemplary embodiment of the present invention. In Figure 8, a wireless network 801 is adapted for communication over a wireless link 811 with an apparatus, such as a mobile communication device, which is referred to as a UE 810, via a wireless network access node, such as a base station or relay station or remote radio head, and more specifically shown as a gNodeB (gNB) 812. The network 801 may include a network control element (NCE) 814, which serves as an access and mobility management function or entity (AMF or MME) and/or a serving gateway (S-GW) to a broader network, such as a public switched telephone/data network and/or the Internet.

The UE 810 includes a controller, such as a computer or a data processor (DP) 810A, a computer-readable memory medium embodied as a memory (MEM) 810B, which stores a program of computer instructions (PROG) 810C, and a suitable radio frequency (RF) transmitter and receiver 810D for bi-directional wireless communications with the gNodeB (gNB) 812 via one or more antennas. The gNodeB 812 also includes a controller, such as a computer or a data processor (DP) 812A, a computer-readable memory medium embodied as a memory (MEM) 812B that stores a program of computer instructions (PROG) 812C, and a suitable RF transmitter and receiver 812D for communication with the UE 810 via one or more antennas. The gNodeB 812 is coupled via a data/control path 813 to the NCE 814. The path 813 may be implemented as an S1 interface when the network 801 is an LTE network. The gNodeB 812 may also be coupled to another gNodeB via data/control path 815, which may be implemented as an X2 interface when the network 801 is an LTE network.

At least one of the PROGs 810C and 812C is assumed to include program instructions that, when executed by the associated DP, enable the device to operate in accordance with the exemplary embodiments of this invention as was detailed above with respect to Figures 1 to 7. That is, the exemplary embodiments of this invention may be implemented at least in part by computer software executable by the DP 810A of the UE 810 and/or by the DP 812A of the gNodeB 812, or by hardware, or by a combination of software and hardware (and firmware).

In general, the various embodiments of the UE 810 can include, but are not limited to, cellular telephones; personal digital assistants (PDAs) having wireless communication capabilities; portable computers having wireless communication capabilities; image capture devices, such as digital cameras, having wireless communication capabilities; gaming devices having wireless communication capabilities; music storage and playback appliances having wireless communication capabilities; and Internet appliances permitting wireless Internet access and browsing, as well as portable units or terminals that incorporate combinations of such functions.

The computer-readable MEMs 810B, 812B, 814B may be of any type suitable to the local technical environment and may be implemented using any suitable data storage technology, such as semiconductor-based memory devices, flash memory, magnetic-memory devices and systems, optical-memory devices and systems, fixed memory and removable memory. The DPs 810A, 812A, 814A may be of any type suitable to the local technical environment, and may include one or more of general purpose computers, special purpose computers, microprocessors, digital signal processors (DSPs) and processors based on a multicore processor architecture, as non-limiting examples.

It should be noted that the various DPs 810A, 812A, 814A may be implemented as one or more processors/chips, either or both of the UE 810 and the gNodeB 812 may include more than one transmitter and/or receiver 810D, 812D, and particularly the gNodeB 812 may have its antennas mounted remotely from the other components of the gNodeB 812, such as for example tower-mounted antennas.

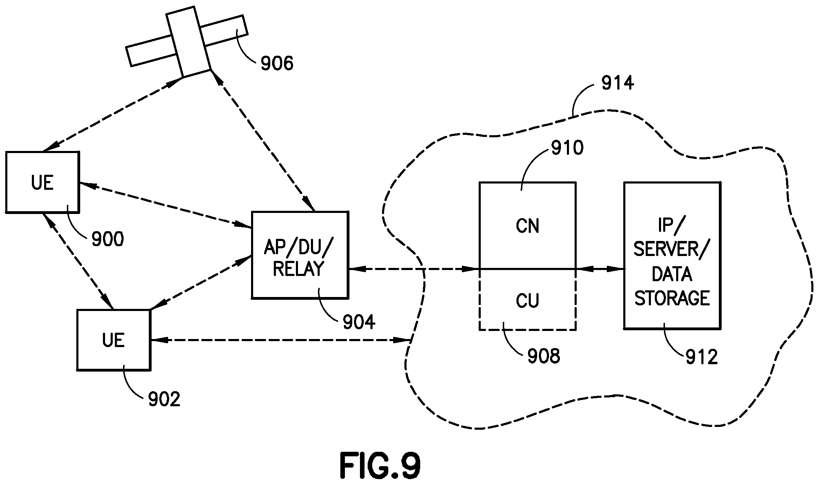

Reference is now made to Figure 9 for illustrating a simplified block diagram of various electronic devices and apparatus that are suitable for use in practicing another exemplary embodiment of the present invention. In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs), and Internet Protocol multimedia subsystems (IMS) or any combination thereof.

Figure 9 depicts examples of simplified system architectures only showing some elements and functional entities, all being logical units, whose implementation may differ from what is shown. The connections shown in Figure 9 are logical connections; the actual physical connections may be different. It is apparent to a person skilled in the art that the system typically comprises also other functions and structures than those shown in Figure 9.

The embodiments are not, however, restricted to the system given as an example, but a person skilled in the art may apply the solution to other communication systems provided with necessary properties.

The example of Figure 9 shows a part of an exemplifying radio access network.

Figure 9 shows user devices 900 and 902 configured to be in a wireless connection on one or more communication channels in a cell with an access node (such as (e/g)NodeB) 904 providing the cell. The physical link from a user device to a/an (e/g)NodeB is called uplink or reverse link and the physical link from the (e/g)NodeB to the user device is called downlink or forward link. It should be appreciated that (e/g)NodeBs or their functionalities may be implemented by using any node, host, server, or access point, etc., entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system to which it is coupled. The NodeB may also be referred to as a base station, an access point, or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 910 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in an Internet of Things (IoT) network which is a scenario in which objects are provided with the ability to transfer data over a network without requiring human-to-human or human-to-computer interaction. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

It should be understood that, in Figure 9, user devices may include two antennas. The number of reception and/or transmission antennas may naturally vary according to a current implementation.

Additionally, although the apparatuses have been depicted as single entities, different units, processors and/or memory units (not all shown in Figure 9) may be implemented.

5G enables the use of multiple input-multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC)), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies, such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 912, or utilize services provided by them. The communication network may also be able to support the usage of cloud services, for example, at least part of core network operations may be carried out as a cloud service (this is depicted in Figure 9 by "cloud" 914). The communication system may also comprise a central control entity, or the like, providing facilities for networks of different operators to cooperate, for example, in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 904) and non-real time functions being carried out in a centralized manner (in a centralized unit, CU 908).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example, by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 906 in the mega-constellation may cover several satellite-enabled network entities that create on-ground cells. The on-ground cells may be created through an on-ground relay node 904 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may also comprise other apparatuses, such as physical layer relay nodes or other network elements, etc. At least one of the (e/g)NodeBs or may be a Home (e/g)nodeB. Additionally, in a geographical area of a radio communication system, a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 9 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 9). An HNB Gateway (HNB-GW), which is typically installed within an operator's network may aggregate traffic from a large number of HNBs back to a core network.

In general, the various exemplary embodiments may be implemented in hardware or special purpose circuits, software, logic or any combination thereof. For example, some aspects may be implemented in hardware, while other aspects may be implemented in firmware or software, which may be executed by a controller, microprocessor or other computing device, although the invention is not limited thereto.

While various aspects of the exemplary embodiments of this invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

It should thus be appreciated that at least some aspects of the exemplary embodiments of the inventions may be practiced in various components, such as integrated circuit chips and modules, and that the exemplary embodiments of this invention may be realized in an apparatus that is embodied as an integrated circuit. The integrated circuit, or circuits, may comprise circuitry, as well as possibly firmware, for embodying at least one or more of a data processor or data processors, a digital signal processor or processors, baseband circuitry and radio frequency circuitry that are configurable so as to operate in accordance with the exemplary embodiments of this invention.

Various modifications and adaptations to the foregoing exemplary embodiments of this invention may become apparent to those skilled in the relevant arts in view of the foregoing description, when read in conjunction with the accompanying drawings. For example, while the exemplary embodiments have been described above in the context of advancements to the 5G NR system, it should be appreciated that the exemplary embodiments of this invention are not limited for use with only this one particular type of wireless communication system. The exemplary embodiments of the invention presented herein are explanatory and not exhaustive or otherwise limiting of the scope of the invention.

The following abbreviations have been used in the preceding discussion:
- AI: Artificial Intelligence
- AMF: Access and Mobility Management Function
- BVDM: Building Vector Data Model
- CC: Channel Component
- CIR: Channel Impulse Response
- CoMP: Coordinated MultiPoint
- CRLB: Cramer Rao Lower Bound
- CSI: Channel State Information
- CTF: Channel Transfer Function
- DNN: Deep Neural Network
- FDD: Frequency Division Duplex
- FFT: Fast Fourier Transform
- gHZ: Gigahertz
- gNB: gNodeB
- GoB: Grid-of-Beam
- IFFT: Inverse Fast Fourier Transform
- JT: Joint Transmission
- LTE: Long Term Evolution
- MDL: Minimum Description Length
- MIMO: Multiple Input Multiple Output
- MME: Mobility Management Entity
- MPC: Multipath Component
- NLOS: Non-Line-of-Sight
- NMSE: Normalized Mean Square Error
- NR: New Radio
- OFDM: Orthogonal Frequency Division Multiplex
- OMP: Orthogonal Matching Pursuit
- PDCCH: Physical Downlink Control Channel
- PRB: Physical Resource Block
- RS: Reference Signal
- Rx: Receiver
- SAGE: Space Alternating Generalized Expectation
- SINR: Signal to Interference and Noise Ratio
- Tx: Transmitter
- UE: User Equipment
- 3GPP: 3^{rd} Generation Partnership Project

The terminology used herein is for the purpose of describing particular embodiments only and is not intended to be limiting of the invention. As used herein, the singular forms "a", "an", and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof.

The description of the present invention has been presented for purposes of illustration and description, but is not intended to be exhaustive or limited to the invention in the form disclosed. Many modifications and variations will be apparent to those of ordinary skill in the art without departing from the scope of the claims. The embodiment was chosen and described in order to best explain the principles of the invention and the practical application, and to enable others of ordinary skill in the art to understand the invention for various embodiments with various modifications as are suited to the particular use contemplated.

Various modifications and adaptations may become apparent to those skilled in the relevant arts in view of the foregoing description, when read in conjunction with the accompanying drawings. However, any and all modifications of the teachings of this disclosure that are in the scope of the claims will still fall within the scope of the invention which is defined by the claims.

Although described in the context of particular embodiments, it will be apparent to those skilled in the art that a number of modifications and various changes to these teachings may occur. Thus, while the invention has been particularly shown and described with respect to one or more embodiments thereof, it will be understood by those skilled in the art that certain modifications or changes may be made therein without departing from the scope of the claims to follow.

## Claims

1. A method comprising:
receiving (700) channel state information reference signals for a plurality of channel components from a network node;
estimating (702) the plurality of channel components based on the channel state information reference signals;
transmitting (704) the estimated plurality of channel components to the network node;
receiving (712) multipath component parameters from the network node;
storing (714) the multipath component parameters; **characterized by**
estimating (714) deviations of the multipath component parameters over time; and
reporting (718) the estimated deviations of the multipath component parameters to the network node.

2. The method as claimed in claim 1, further comprising:
repeating receiving channel state information reference signals for the plurality of channel components from the network node and estimating the plurality of channel components based on the channel state information reference signals a plurality of times; and
storing the estimated plurality of channel components.

3. The method as claimed in any one of claims 1 to 2, further comprising:
repeating estimating deviations of the multipath component parameters over time and reporting the estimated deviations of the multipath component parameters to the network node a plurality of times.

4. A method comprising:
transmitting (700) channel state information reference signals for a plurality of channel components to a user equipment;
receiving (704) an estimated plurality of channel components from the user equipment;
storing (706) the estimated plurality of channel components for channel state information;
calculating (706) a profiled parameter estimation for multipath components of the channel components by shifting relative delay between the multipath components and sample timing of channel impulse response in multiple steps to generate a profile of convoluted multipath components and by estimating from it the related multipath component parameters;
transmitting (712) the profiled parameter estimation for the multipath components to the user equipment; **characterized by**
receiving (718) estimated deviations in the multipath component parameters over time from the user equipment; and
adapting (720) the channel state information with the received estimated deviations in the multipath component parameters to obtain an updated prediction of the channel state information.

5. The method as claimed in claim 4, further comprising:
repeating transmitting channel state information reference signals for the plurality of channel components to the user equipment a plurality of times.

6. The method as claimed in any one of claims 4 to 5, wherein calculating the profiled parameter estimation for each multipath component is performed by:
forwarding the estimated channel state information to a telco edge cloud; and
receiving the profiled parameter estimation for each multipath component from the telco edge cloud.

7. The method as claimed in any one of claims 4 to 6, further comprising:
repeating receiving estimated deviations in the multipath component parameters over time from the user equipment and adapting the channel state information with the received estimated deviations in the multipath component parameters to obtain an improved prediction of the channel state information a plurality of times.

8. The method as claimed in any one of claims 1 to 7, wherein the multipath component parameters comprise relative delay τᵢ, amplitude αᵢ, and phase ϕᵢ.

9. An apparatus comprising:
means (810A, 810B, 810C, 810D) for receiving channel state information reference signals for a plurality of channel components from a network node;
means (810A, 810B, 810C) for estimating the plurality of channel components based on the channel state information reference signals;
means (810A, 810B, 810C, 810D) for transmitting the estimated plurality of channel components to the network node;
means (810A, 810B, 810C, 810D) for receiving multipath component parameters from the network node;
means (810A, 810B, 810C) for storing the multipath component parameters;
**characterized by**
means (810A, 810B, 810C) for estimating deviations of the multipath component parameters over time; and
means (810A, 810B, 810C, 810D) for reporting the estimated deviations of the multipath component parameters to the network node.

10. The apparatus as claimed in claim 9, further comprising:
means for repeating receiving channel state information reference signals for the plurality of channel components from the network node and estimating the plurality of channel components based on the channel state information reference signals a plurality of times; and
means for storing the estimated plurality of channel components.

11. The apparatus as claimed in any one of claims 9 to 10, further comprising:
means for repeating estimating deviations of the multipath component parameters over time and reporting the estimated deviations of the multipath component parameters to the network node a plurality of times.

12. An apparatus comprising:
means (812A, 812B, 812C, 812D) for transmitting channel state information reference signals for a plurality of channel components to a user equipment;
means (812A, 812B, 812C, 812D) for receiving an estimated plurality of channel components from the user equipment;
means (812A, 812B, 812C) for storing the estimated plurality of channel components for channel state information;
means (812A, 812B, 812C) for calculating a profiled parameter estimation for multipath components of the channel components by shifting relative delay between the multipath components and sample timing of channel impulse response in multiple steps to generate a profile of convoluted multipath components and by estimateing from it the related multipath component parameters;
means (812A, 812B, 812C, 812D) for transmitting the profiled parameter estimation for the multipath components to the user equipment; **characterized by**
means (812A, 812B, 812C, 812D) for receiving estimated deviations in the multipath component parameters over time from the user equipment; and
means (812A, 812B, 812C, 812D) for adapting the channel state information with the received estimated deviations in the multipath component parameters to obtain an updated prediction of the channel state information.

13. The apparatus as claimed in claim 12, further comprising:
means for repeating transmitting channel state information reference signals for the plurality of channel components to the user equipment a plurality of times.

14. The apparatus as claimed in any one of claims 12 to 13, wherein calculating a profiled parameter estimation for each multipath component is performed by:
forwarding the estimated channel state information to a telco edge cloud; and
receiving the profiled parameter estimation for each multipath component from the telco edge cloud.

15. The apparatus as claimed in any one of claims 12 to 14, further comprising:
means for repeating receiving estimated deviations in the multipath component parameters over time from the user equipment and adapting the channel state information with the received estimated deviations in the multipath component parameters to obtain an improved prediction of the channel state information a plurality of times.

## Patentansprüche

1. Verfahren, das Folgendes umfasst:
Empfangen (700) von Kanalzustandsinformationsreferenzsignalen für eine Vielzahl von Kanalkomponenten von einem Netzwerkknoten;
Schätzen (702) der Vielzahl von Kanalkomponenten auf Basis der Kanalzustandsinformationsreferenzsignale;
Übertragen (704) der geschätzten Vielzahl von Kanalkomponenten zum Netzwerkknoten;
Empfangen (712) von Mehrpfadkomponentenparametern vom Netzwerkknoten;
Speichern (714) der Mehrpfadkomponentenparameter;
**gekennzeichnet durch**
Schätzen (714) von Abweichungen der Mehrpfadkomponentenparameter über die Zeit; und
Melden (718) der geschätzten Abweichungen der Mehrpfadkomponentenparameter bei einem Netzwerkknoten.

2. Verfahren nach Anspruch 1, das ferner Folgendes umfasst:
Wiederholen des Empfangens von Kanalzustandsinformationsreferenzsignalen für die Vielzahl von Kanalkomponenten vom Netzwerkknoten und des Schätzens der Vielzahl von Kanalkomponenten auf Basis der Kanalzustandsinformationsreferenzsignale eine Vielzahl von Malen; und
Speichern der geschätzten Vielzahl von Kanalkomponenten.

3. Verfahren nach einem der Ansprüche 1 bis 2, das ferner Folgendes umfasst:
Wiederholen des Schätzens von Abweichungen der Mehrpfadkomponentenparameter über die Zeit und des Meldens der geschätzten Abweichungen der Mehrpfadkomponentenparameter beim Netzwerkknoten eine Vielzahl von Malen.

4. Verfahren, das Folgendes umfasst:
Übertragen (700) von Kanalzustandsinformationsreferenzsignalen für eine Vielzahl von Kanalkomponenten zu einer Teilnehmereinrichtung;
Empfangen (704) einer geschätzten Vielzahl von Kanalkomponenten von der Teilnehmereinrichtung;
Speichern (706) der geschätzten Vielzahl von Kanalkomponenten für Kanalzustandsinformationen;
Berechnen (706) einer profilierten Parameterschätzung für Mehrpfadkomponenten der Kanalkomponenten durch Verschieben einer relativen Verzögerung zwischen den Mehrpfadkomponenten und einer Abtastzeit einer Kanalimpulsantwort in mehreren Schritten, um ein Profil von verschachtelten Mehrpfadkomponenten zu erzeugen, und durch Schätzen anhand dessen der zugehörigen Mehrpfadkomponentenparameter;
Übertragen (712) der profilierten Parameterschätzung für die Mehrpfadkomponenten zur Teilnehmereinrichtung; **gekennzeichnet durch**
Empfangen (718) von geschätzten Abweichungen in den Mehrpfadkomponentenparametern über die Zeit von der Teilnehmereinrichtung; und
Anpassen (720) der Kanalzustandsinformationen mit den empfangenen geschätzten Abweichungen in den Mehrpfadkomponentenparametern, um eine aktualisierte Vorhersage der Kanalzustandsinformationen zu erhalten.

5. Verfahren nach Anspruch 4, das ferner Folgendes umfasst:
Wiederholen des Übertragens von Kanalzustandsinformationsreferenzsignalen für die Vielzahl von Kanalkomponenten zur Teilnehmereinrichtung eine Vielzahl von Malen.

6. Verfahren nach einem der Ansprüche 4 bis 5, wobei das Berechnen der profilierten Parameterschätzung für jede Mehrpfadkomponente durch Folgendes durchgeführt wird:
Weiterleiten der geschätzten Kanalzustandsinformationen zu einer Telco-Edge-Cloud; und
Empfangen der profilierten Parameterschätzung für jede Mehrpfadkomponente von der Telco-Edge-Cloud.

7. Verfahren nach einem der Ansprüche 4 bis 6, das ferner Folgendes umfasst:
Wiederholen des Empfangens von geschätzten Abweichungen in den Mehrpfadkomponentenparametern über die Zeit von der Teilnehmereinrichtung und des Anpassens der Kanalzustandsinformationen mit den empfangenen geschätzten Abweichungen in den Mehrpfadkomponentenparametern, um eine verbesserte Vorhersage der Kanalzustandsinformationen zu erhalten, eine Vielzahl von Malen.

8. Verfahren nach einem der Ansprüche 1 bis 7, wobei die Mehrpfadkomponentenparameter eine relative Verzögerung τᵢ, eine Amplitude αᵢ und eine Phase ϕᵢ umfassen.

9. Vorrichtung, die Folgendes umfasst:
Mittel (810A, 810B, 810C, 810D) zum Empfangen von Kanalzustandsinformationsreferenzsignalen für eine Vielzahl von Kanalkomponenten von einem Netzwerkknoten;
Mittel (810A, 810B, 810C) zum Schätzen der Vielzahl von Kanalkomponenten auf Basis der Kanalzustandsinformationsreferenzsignale;
Mittel (810A, 810B, 810C, 810D) zum Übertragen der geschätzten Vielzahl von Kanalkomponenten zum Netzwerkknoten;
Mittel (810A, 810B, 810C, 810D) zum Empfangen von Mehrpfadkomponentenparametern vom Netzwerkknoten;
Mittel (810A, 810B, 810C) zum Speichern der Mehrpfadkomponentenparameter; **gekennzeichnet durch**
Mittel (810A, 810B, 810C) zum Schätzen von Abweichungen der Mehrpfadkomponentenparameter über die Zeit; und
Mittel (810A, 810B, 810C, 810D) zum Melden der geschätzten Abweichungen der Mehrpfadkomponentenparameter bei einem Netzwerkknoten.

10. Vorrichtung nach Anspruch 9, die ferner Folgendes umfasst:
Mittel zum Wiederholen des Empfangens von Kanalzustandsinformationsreferenzsignalen für die Vielzahl von Kanalkomponenten vom Netzwerkknoten und des Schätzens der Vielzahl von Kanalkomponenten auf Basis der Kanalzustandsinformationsreferenzsignale eine Vielzahl von Malen; und
Mittel zum Speichern der geschätzten Vielzahl von Kanalkomponenten.

11. Vorrichtung nach einem der Ansprüche 9 bis 10, das ferner Folgendes umfasst:
Mittel zum Wiederholen des Schätzens von Abweichungen der Mehrpfadkomponentenparameter über die Zeit und des Meldens der geschätzten Abweichungen der Mehrpfadkomponentenparameter beim Netzwerkknoten eine Vielzahl von Malen.

12. Vorrichtung, die Folgendes umfasst:
Mittel (812A, 812B, 812C, 812D) zum Übertragen von Kanalzustandsinformationsreferenzsignalen für eine Vielzahl von Kanalkomponenten zu einer Teilnehmereinrichtung;
Mittel (812A, 812B, 812C, 812D) zum Empfangen einer geschätzten Vielzahl von Kanalkomponenten von der Teilnehmereinrichtung;
Mittel (812A, 812B, 812C) zum Speichern der geschätzten Vielzahl von Kanalkomponenten für Kanalzustandsinformationen;
Mittel (812A, 812B, 812C) zum Berechnen einer profilierten Parameterschätzung für Mehrpfadkomponenten der Kanalkomponenten durch Verschieben einer relativen Verzögerung zwischen den Mehrpfadkomponenten und einer Abtastzeit einer Kanalimpulsantwort in mehreren Schritten, um ein Profil von verschachtelten Mehrpfadkomponenten zu erzeugen, und durch Schätzen anhand dessen der zugehörigen Mehrpfadkomponentenparameter;
Mittel (812A, 812B, 812C, 812D) zum Übertragen der profilierten Parameterschätzung für die Mehrpfadkomponenten zur Teilnehmereinrichtung; **gekennzeichnet durch**
Mittel (812A, 812B, 812C, 812D) zum Empfangen von geschätzten Abweichungen in den Mehrpfadkomponentenparametern über die Zeit von der Teilnehmereinrichtung; und
Mittel (812A, 812B, 812C, 812D) zum Anpassen der Kanalzustandsinformationen mit den empfangenen geschätzten Abweichungen in den Mehrpfadkomponentenparametern, um eine aktualisierte Vorhersage der Kanalzustandsinformationen zu erhalten.

13. Vorrichtung nach Anspruch 12, die ferner Folgendes umfasst:
Mittel zum Wiederholen des Übertragens von Kanalzustandsinformationsreferenzsignalen für die Vielzahl von Kanalkomponenten zur Teilnehmereinrichtung eine Vielzahl von Malen.

14. Vorrichtung nach einem der Ansprüche 12 bis 13, wobei das Berechnen einer profilierten Parameterschätzung für jede Mehrpfadkomponente durch Folgendes durchgeführt wird:
Weiterleiten der geschätzten Kanalzustandsinformationen zu einer Telco-Edge-Cloud; und
Empfangen der profilierten Parameterschätzung für jede Mehrpfadkomponente von der Telco-Edge-Cloud.

15. Vorrichtung nach einem der Ansprüche 12 bis 14, das ferner Folgendes umfasst:
Mittel zum Wiederholen des Empfangens von geschätzten Abweichungen in den Mehrpfadkomponentenparametern über die Zeit von der Teilnehmereinrichtung und des Anpassens der Kanalzustandsinformationen mit den empfangenen geschätzten Abweichungen in den Mehrpfadkomponentenparametern, um eine verbesserte Vorhersage der Kanalzustandsinformationen zu erhalten, eine Vielzahl von Malen.

## Revendications

1. Procédé comprenant :
la réception (700), d'un noeud de réseau, de signaux de référence d'informations d'état de canal pour une pluralité de composantes de canal ;
l'estimation (702) de la pluralité de composantes de canal sur la base des signaux de référence d'informations d'état de canal ;
la transmission (704) de la pluralité estimée de composantes de canal au noeud de réseau ;
la réception (712), du noeud de réseau, de paramètres de composante à trajets multiples ;
le stockage (714) des paramètres de composante à trajets multiples ; **caractérisé par**
l'estimation (714) d'écarts des paramètres de composante à trajets multiples dans le temps ; et
le signalement (718) des écarts estimés des paramètres de composante à trajets multiples au noeud de réseau.

2. Procédé selon la revendication 1, comprenant en outre :
la réception répétée du noeud de réseau, de signaux de référence d'informations d'état de canal pour la pluralité de composantes de canal, et l'estimation de la pluralité de composantes de canal sur la base des signaux de référence d'informations d'état de canal, plusieurs fois ; et
le stockage de la pluralité estimée de composantes de canal.

3. Procédé selon l'une quelconque des revendications 1 et 2, comprenant en outre :
l'estimation répétée d'écarts des paramètres de composante à trajets multiples dans le temps et le signalement des écarts estimés des paramètres de composante à trajets multiples au noeud de réseau, plusieurs fois.

4. Procédé comprenant :
la transmission (700) de signaux de référence d'informations d'état de canal pour une pluralité de composantes de canal à un équipement utilisateur ;
la réception (704), de l'équipement utilisateur, d'une pluralité estimée de composantes de canal ;
le stockage (706) de la pluralité estimée de composantes de canal pour les informations d'état de canal ;
le calcul (706) d'une estimation de paramètres de profil pour des composantes à trajets multiples des composantes de canal en décalant le retard relatif entre les composantes à trajets multiples et un temps d'échantillonnage de la réponse impulsionnelle de canal sur plusieurs étapes, pour générer un profil de composantes à trajets multiples convoluées, et en estimant à partir de celui-ci les paramètres de composante à trajets multiples connexes ;
la transmission (712) de l'estimation de paramètres de profil pour les composantes à trajets multiples à l'équipement utilisateur ; **caractérisé par**
la réception (718), de l'équipement utilisateur, d'écarts estimés dans les paramètres de composante à trajets multiples dans le temps ; et
l'adaptation (720) des informations d'état de canal avec les écarts estimés reçus dans les paramètres de composante à trajets multiples, pour obtenir une prédiction actualisée des informations d'état de canal.

5. Procédé selon la revendication 4, comprenant en outre :
la transmission répétée de signaux de référence d'informations d'état de canal pour la pluralité de composantes de canal à l'équipement utilisateur, plusieurs fois.

6. Procédé selon l'une quelconque des revendications 4 et 5, dans lequel le calcul de l'estimation de paramètres de profil pour chaque composante à trajets multiples est effectué :
en transférant les informations d'état de canal estimées à un nuage de périphérie de télécommunication ; et
en recevant, du nuage de périphérie de télécommunication, l'estimation de paramètres de profil pour chaque composante à trajets multiples.

7. Procédé selon l'une quelconque des revendications 4 à 6, comprenant en outre :
la réception répétée, de l'équipement utilisateur, d'écarts estimés dans les paramètres de composante à trajets multiples dans le temps et l'adaptation des informations d'état de canal avec les écarts estimés reçus dans les paramètres de composante à trajets multiples, pour obtenir une prédiction améliorée des informations d'état de canal, plusieurs fois.

8. Procédé selon l'une quelconque des revendications 1 à 7, dans lequel les paramètres de composante à trajets multiples comprennent un retard relatif τᵢ, une amplitude αᵢ et une phase ϕᵢ.

9. Appareil comprenant :
des moyens (810A, 810B, 810C, 810D) pour recevoir d'un noeud de réseau des signaux de référence d'informations d'état de canal pour une pluralité de composantes de canal ;
des moyens (810A, 810B, 810C) pour estimer la pluralité de composantes de canal sur la base des signaux de référence d'informations d'état de canal ;
des moyens (810A, 810B, 810C, 810D) pour transmettre la pluralité estimée de composantes de canal au noeud de réseau ;
des moyens (810A, 810B, 810C, 810D) pour recevoir, du noeud de réseau, des paramètres de composante à trajets multiples ;
des moyens (810A, 810B, 810C) pour stocker les paramètres de composante à trajets multiples ;
**caractérisé par**
des moyens (810A, 810B, 810C) pour estimer des écarts des paramètres de composante à trajets multiples dans le temps ; et
des moyens (810A, 810B, 810C, 810D) pour rapporter les écarts estimés des paramètres de composante à trajets multiples au noeud de réseau.

10. Appareil selon la revendication 9, comprenant en outre :
des moyens pour répéter la réception du noeud de réseau signaux de référence d'informations d'état de canal pour la pluralité de composantes de canal et l'estimation de la pluralité de composantes de canal, sur la base des signaux de référence d'informations d'état de canal, plusieurs fois ; et
des moyens pour stocker la pluralité estimée de composantes de canal.

11. Appareil selon l'une quelconque des revendications 9 et 10, comprenant en outre :
des moyens pour répéter l'estimation d'écarts des paramètres de composante à trajets multiples dans le temps et le signalement des écarts estimés des paramètres de composante à trajets multiples au noeud de réseau, plusieurs fois.

12. Appareil comprenant :
des moyens (812A, 812B, 812C, 812D) pour transmettre des signaux de référence d'informations d'état de canal pour une pluralité de composantes de canal à un équipement utilisateur ;
des moyens (812A, 812B, 812C, 812D) pour recevoir, de l'équipement utilisateur, une pluralité estimée de composantes de canal ;
des moyens (812A, 812B, 812C) pour stocker la pluralité estimée de composantes de canal pour des informations d'état de canal ;
des moyens (812A, 812B, 812C) pour calculer une estimation de paramètres de profil pour des composantes à trajets multiples des composantes de canal en décalant le retard relatif entre les composantes à trajets multiples et un temps d'échantillonnage de la réponse impulsionnelle de canal sur plusieurs étapes, pour générer un profil de composantes à trajets multiples convoluées et en estimant à partir de celui-ci les paramètres de composante à trajets multiples connexes ;
des moyens (812A, 812B, 812C, 812D) pour transmettre l'estimation de paramètres de profil pour les composantes à trajets multiples à l'équipement utilisateur ; **caractérisé par**
des moyens (812A, 812B, 812C, 812D) pour recevoir, de l'équipement utilisateur, des écarts estimés dans les paramètres de composante à trajets multiples dans le temps; et
des moyens (812A, 812B, 812C, 812D) pour adapter les informations d'état de canal avec les écarts estimés reçus dans les paramètres de composante à trajets multiples, pour obtenir une prédiction actualisée des informations d'état de canal.

13. Appareil selon la revendication 12, comprenant en outre :
des moyens pour répéter la transmission de signaux de référence d'informations d'état de canal pour la pluralité de composantes de canal à l'équipement utilisateur, plusieurs fois.

14. Appareil selon l'une quelconque des revendications 12 et 13, dans lequel le calcul d'une estimation de paramètres de profil pour chaque composante à trajets multiples est effectué :
en transférant les informations d'état de canal estimées à un nuage de périphérie de télécommunication ; et
en recevant, du nuage de périphérie de télécommunication, l'estimation de paramètres de profil pour chaque composante à trajets multiples.

15. Appareil selon l'une quelconque des revendications 12 à 14, comprenant en outre :
des moyens pour répéter la réception, de l'équipement utilisateur, des écarts estimés dans les paramètres de composante à trajets multiples dans le temps et adapter les informations d'état de canal avec les écarts estimés reçus dans les paramètres de composante à trajets multiples, pour obtenir une prédiction améliorée des informations d'état de canal, plusieurs fois.
